# EUROPEAN PATENT APPLICATION

(11) **EP 4 365 635 A1**
(43) Date of publication of application: **08.05.2024**
(21) Application number: 23204598.9
(22) Date of filing: 19.10.2023
(51) Int. Cl.: G01S 19/04, G01S 19/08, G01S 19/21, G01S 19/44

(54) **ROVER POSITION COMPUTATION USING SAFE DATA**

(30) Priority: 02.11.2022 US 202217979617
(71) Applicant: Trimble Inc., Westminster, CO 80021 (US)
(72) Inventor: KIPKA, Adrian, Westminster, CO 80021 (US); BRANDL, Markus, Westminster, CO 80021 (US)
(74) Representative: AWA Sweden AB

(57) **Abstract**

Described herein are systems, methods, and other techniques for computing a position of a rover using satellite signals from a plurality of satellites. Safe ephemeris data may be received at a base station. The safe ephemeris data may indicate positions of the plurality of satellites. The safe ephemeris data may be wirelessly transmitted from the base station to the rover. Rover carrier-phase measurements may be obtained based on the satellite signals received at the rover. The position of the rover may be computed using at least the rover carrier phase measurements and the safe ephemeris data.

## Description

### BACKGROUND OF THE INVENTION

Global navigation satellite systems (GNSS) are systems that use low Earth orbit (LEO), medium Earth orbit (MEO), or geosynchronous orbit (GEO) satellites to provide geospatial positioning of receiving devices. Typically, wireless signals transmitted from such satellites can be used by GNSS receivers to determine their position, velocity, and time. Examples of currently operational GNSSs include the United States' Global Positioning System (GPS), Russia's Global Navigation Satellite System (GLONASS), China's BeiDou Satellite Navigation System, the European Union's Galileo, Japan's Quasi-Zenith Satellite System (QZSS), and the Indian Regional Navigation Satellite System (IRNSS). Today, GNSS receivers are used in a wide range of applications, including navigation (e.g., for automobiles, planes, boats, persons, animals, freight, military precision-guided munitions, etc.), surveying, mapping, and time referencing.

The accuracy of GNSS receivers has improved drastically over the past few decades due to several technological improvements. One such improvement is the use of differential measurement techniques, in which GNSS signals received by a fixed receiver are used to generate correction data that is communicated to a mobile receiver. Typically, a roving receiver (or simply "rover") receives the correction data from a reference source or base station that already knows its exact location, in addition to receiving signals from GNSS satellites. To generate the correction data, the base station first tracks all the satellites in view and measures their pseudoranges. Next, the base station computes its position and compares the computed position to its known position to generate a list of corrections needed to make the measured pseudorange values accurate for all visible satellites. The correction data is then communicated to the rover, which applies these corrections to its computed pseudoranges to produce a more accurate position. This technique may be referred to as differential GNSS.

Another improvement to GNSS accuracy came through the use of real-time kinematic (RTK) measurement techniques, in which the rover determines its position relative to the base station by measuring the phase of the carrier wave. The carrier signal has a much shorter wavelength than the width of a PRN code (a hundred to a thousand times shorter), which proportionally improves the ability to measure distance. RTK networks offer several advantages to users, including (1) fast, centimeter-level positioning anywhere over a large area, (2) a common coordinate reference frame, and (3) elimination of the need to set up a private base station for a project. This technique may be referred to as RTK GNSS or network RTK GNSS.

### SUMMARY OF THE INVENTION

A summary of the various embodiments of the invention is provided below as a list of examples. As used below, any reference to a series of examples is to be understood as a reference to each of those examples disjunctively (e.g., "Examples 1-4" is to be understood as "Examples 1, 2, 3, or 4").

Example 1 is a method of computing a position of a rover, the method comprising: receiving safe ephemeris data at a base station, the safe ephemeris data indicating positions of a plurality of satellites; wirelessly transmitting the safe ephemeris data from the base station to the rover; receiving satellite signals at the rover having been transmitted by the plurality of satellites; obtaining rover carrier-phase measurements based on the satellite signals received at the rover; and computing the position of the rover using the rover carrier phase measurements and the safe ephemeris data.

Example 2 is the method of example(s) 1, further comprising: receiving satellite signals at the base station having been transmitted by the plurality of satellites; obtaining reference carrier phase measurements based on the satellite signals received at the base station; and obtaining reference ephemeris data based on the satellite signals received at the base station.

Example 3 is the method of example(s) 2, further comprising: performing a comparison between the reference ephemeris data and the safe ephemeris data to determine whether the satellite signals received at the base station are spoofed signals.

Example 4 is the method of example(s) 3, further comprising: based on the comparison, determining that the satellite signals received at the base station are spoofed signals; and wirelessly transmitting a spoofing indicator from the base station to the rover indicating that the satellite signals received at the base station are spoofed signals.

Example 5 is the method of example(s) 3, further comprising: based on the comparison, determining that the satellite signals received at the base station are not spoofed signals; and wirelessly transmitting the reference carrier phase measurements from the base station to the rover, wherein the position of the rover (relative to the base station) is computed further using the reference carrier phase measurements.

Example 6 is the method of example(s) 1-5, further comprising: wirelessly transmitting a position of the base station from the base station to the rover, wherein the (absolute) position of the rover is computed further using the position of the base station.

Example 7 is the method of example(s) 1, further comprising: receiving safe correction data at the base station, wherein the safe correction data is derived from a geographic-specific error model; and wirelessly transmitting the safe correction data from the base station to the rover, wherein the position of the rover is computed further using the safe correction data.

Example 8 is the method of example(s) 1-7, wherein the satellite signals received at the rover are transmitted by a plurality of Global Positioning System (GPS) satellites.

Example 9 is one or more non-transitory computer-readable media comprising instructions that, when executed by one or more processors, cause the one or more processors to perform operations for computing a position of a rover, the operations comprising: receiving safe ephemeris data at a base station, the safe ephemeris data indicating positions of a plurality of satellites; wirelessly transmitting the safe ephemeris data from the base station to the rover; receiving satellite signals at the rover having been transmitted by the plurality of satellites; obtaining rover carrier-phase measurements based on the satellite signals received at the rover; and computing the position of the rover using the rover carrier phase measurements and the safe ephemeris data.

Example 10 is the one or more non-transitory computer-readable media of example(s) 9, wherein the operations further comprise: receiving satellite signals at the base station having been transmitted by the plurality of satellites; obtaining reference carrier phase measurements based on the satellite signals received at the base station; and obtaining reference ephemeris data based on the satellite signals received at the base station.

Example 11 is the one or more non-transitory computer-readable media of example(s) 10, wherein the operations further comprise: performing a comparison between the reference ephemeris data and the safe ephemeris data to determine whether the satellite signals received at the base station are spoofed signals.

Example 12 is the one or more non-transitory computer-readable media of example(s) 11, wherein the operations further comprise: based on the comparison, determining that the satellite signals received at the base station are spoofed signals; and wirelessly transmitting a spoofing indicator from the base station to the rover indicating that the satellite signals received at the base station are spoofed signals.

Example 13 is the one or more non-transitory computer-readable media of example(s) 11, wherein the operations further comprise: based on the comparison, determining that the satellite signals received at the base station are not spoofed signals; and wirelessly transmitting the reference carrier phase measurements from the base station to the rover, wherein the position of the rover (relative to the base station) is computed further using the reference carrier phase measurements.

Example 14 is the one or more non-transitory computer-readable media of example(s) 9-13, wherein the operations further comprise: wirelessly transmitting a position of the base station from the base station to the rover, wherein the (absolute) position of the rover is computed further using the position of the base station.

Example 15 is the one or more non-transitory computer-readable media of example(s) 9, wherein the operations further comprise: receiving safe correction data at the base station, wherein the safe correction data is derived from a geographic-specific error model; and wirelessly transmitting the safe correction data from the base station to the rover, wherein the position of the rover is computed further using the safe correction data.

Example 16 is a system comprising: one or more processors; and one or more computer-readable media comprising instructions that, when executed by the one or more processors, cause the one or more processors to perform operations for computing a position of a rover, the operations comprising: receiving safe ephemeris data at a base station, the safe ephemeris data indicating positions of a plurality of satellites; wirelessly transmitting the safe ephemeris data from the base station to the rover; receiving satellite signals at the rover having been transmitted by the plurality of satellites; obtaining rover carrier-phase measurements based on the satellite signals received at the rover; and computing the position of the rover using the rover carrier phase measurements and the safe ephemeris data.

Example 17 is the system of example(s) 16, wherein the operations further comprise: receiving satellite signals at the base station having been transmitted by the plurality of satellites; obtaining reference carrier phase measurements based on the satellite signals received at the base station; and obtaining reference ephemeris data based on the satellite signals received at the base station.

Example 18 is the system of example(s) 17, wherein the operations further comprise: performing a comparison between the reference ephemeris data and the safe ephemeris data to determine whether the satellite signals received at the base station are spoofed signals.

Example 19 is the system of example(s) 18, wherein the operations further comprise: based on the comparison, determining that the satellite signals received at the base station are spoofed signals; and wirelessly transmitting a spoofing indicator from the base station to the rover indicating that the satellite signals received at the base station are spoofed signals.

Example 20 is the system of example(s) 18, wherein the operations further comprise: based on the comparison, determining that the satellite signals received at the base station are not spoofed signals; and wirelessly transmitting the reference carrier phase measurements from the base station to the rover, wherein the position of the rover (relative to the base station) is computed further using the reference carrier phase measurements.

Example 21 is the system of example(s) 16-20, wherein the operations further comprise: wirelessly transmitting a position of the base station from the base station to the rover, wherein the (absolute) position of the rover is computed further using the position of the base station.

Example 22 is the system of example(s) 16, wherein the operations further comprise: receiving safe correction data at the base station, wherein the safe correction data is derived from a geographic-specific error model; and wirelessly transmitting the safe correction data from the base station to the rover, wherein the position of the rover is computed further using the safe correction data.

### BRIEF DESCRIPTION OF THE DRAWINGS

The accompanying drawings, which are included to provide a further understanding of the disclosure, are incorporated in and constitute a part of this specification, illustrate embodiments of the disclosure and together with the detailed description serve to explain the principles of the disclosure. No attempt is made to show structural details of the disclosure in more detail than may be necessary for a fundamental understanding of the disclosure and various ways in which it may be practiced.
FIG. 1 illustrates an example of a rover, a mobile base station, and a stationary base station operating within a GNSS.
FIG. 2 illustrates an example block diagram of a GNSS receiver.
FIG. 3 illustrates an example technique of computing a position of a rover using safe correction data transmitted by a base station.
FIG. 4 illustrates an example technique of computing a position of a rover using safe correction data transmitted by a base station.
FIG. 5 illustrates an example technique of computing a position of a rover using safe correction data transmitted by a base station.
FIG. 6 illustrates a method of computing a position of a rover.
FIG. 7 illustrates an example computer system comprising various hardware elements.

In the appended figures, similar components and/or features may have the same numerical reference label. Further, various components of the same type may be distinguished by following the reference label with a letter or by following the reference label with a dash followed by a second numerical reference label that distinguishes among the similar components and/or features. If only the first numerical reference label is used in the specification, the description is applicable to any one of the similar components and/or features having the same first numerical reference label, irrespective of the suffix.

### DETAILED DESCRIPTION OF THE INVENTION

Positioning systems that use real-time kinematic (RTK) measurement techniques generally provide for the measurement and communication of the phases of multiple carrier waves (or simply "carrier phases") by a base station to a rover. These carrier phases may be measured from several incoming satellite signals that are transmitted by several global navigation satellite system (GNSS) satellites. Upon receiving the carrier phases, a rover can compare them to its own set of carrier phases measured from received satellite signals that are transmitted by the same GNSS satellites. These two sets of carrier phases are sufficient for the rover to compute a vector between itself and the base station. Thus, given the coordinates of the base station (which can also be communicated by the base station to the rover), the rover can compute its location within a particular coordinate frame, such as the International Terrestrial Reference Frame (ITRF) which has an origin at the center of mass of the Earth.

Various approaches can allow for the communication of the carrier phases and other correction data (e.g., base station coordinates) from the base station to the rover. In some instances, 450 MHz UHF radios may be used, which can require frequency coordination as well as Federal Communications Commission (FCC) licenses for operation in certain areas. In some instances, 900 MHz transceivers may be used, such as those manufactured by FreeWave^{®} or Trimble^{®}. In some instances, cellular data modems may be used, which may be limited to use in geographies with cellular system coverage and require paid service plans. In other instances, Internet Protocol (IP) may be used over Wi-Fi networks, in which the rover may establish and maintain an association with a base station.

Satellite positioning using RTK techniques has become popular primarily due to its high accuracy relative to other techniques. For example, in the context of the Global Satellite System (GPS), to readily provide such carrier phases, both the rover and the base station may track the phases of the L1 and/or L2 carriers as well as the C/A code during the positioning process. While the C/A code cycle width of 1 ms can represent a distance of 300,000 m at the speed of light, the carrier wavelengths are much shorter distances: L1 is 0.19 m and L2 is 0.24 m. Accordingly, if the difference between reception times of the same carrier phase at two different receivers can be measured to about 1% of a cycle, the relative positions can be resolved to within 0.001 m.

However, RTK techniques can potentially have several issues. For example, the GNSS signals received at either the base station or rover can be spoofed, jammed, and/or interfered with, leading to inaccurate carrier phase measurements and/or inaccurate ephemeris data. Spoofing is an attack in which an attacker produces fake GNSS signals that are not coming from the satellite itself with the goal of influencing the position and/or timing information of the device under attack. During such a situation, the range measurements and the data decoded from the GNSS signal (e.g., broadcast ephemeris data) are not trustworthy. In some instances, spoofing of the ephemeris data can be particularly problematic when an attacker replays (and potentially alters) a previously recorded GNSS signal in an area.

Embodiments of the present disclosure address these and other issues (such as base station hardware failure or unintentional antenna movement) by providing a technique for transmitting safe correction data from a base station to a receiver. The modifier "safe" in this context may mean "unaffected by spoofing", such that the carrier phase measurements and the ephemeris data contained in the safe correction data may be verified by the base station to be unaffected by a spoofing signal. In some embodiments, the base station may receive safe ephemeris data from a server and via a satellite connection or a non-satellite connection (such as a wired connection or an IP connection). Since this safe ephemeris data can be trusted to not be spoofed, it can be wirelessly transmitted to the rover for use in its position computation.

Furthermore, the safe ephemeris data can be compared to the ephemeris data decoded from the GNSS signals received at the base station (referred to as "reference ephemeris data"). Based on the consistency between the two types of ephemeris data, it can be determined whether the GNSS signals received at the base station are spoofed signals. For example, if the safe ephemeris data indicates different satellite positions than the reference ephemeris data, it can be determined that the GNSS signals are spoofed signals, and accordingly the carrier phase measurements can be prevented from being transmitted to the rover.

In the following description, various examples will be described. For purposes of explanation, specific configurations and details are set forth in order to provide a thorough understanding of the examples. However, it will also be apparent to one skilled in the art that the example may be practiced without the specific details. Furthermore, well-known features may be omitted or simplified in order not to obscure the embodiments being described.

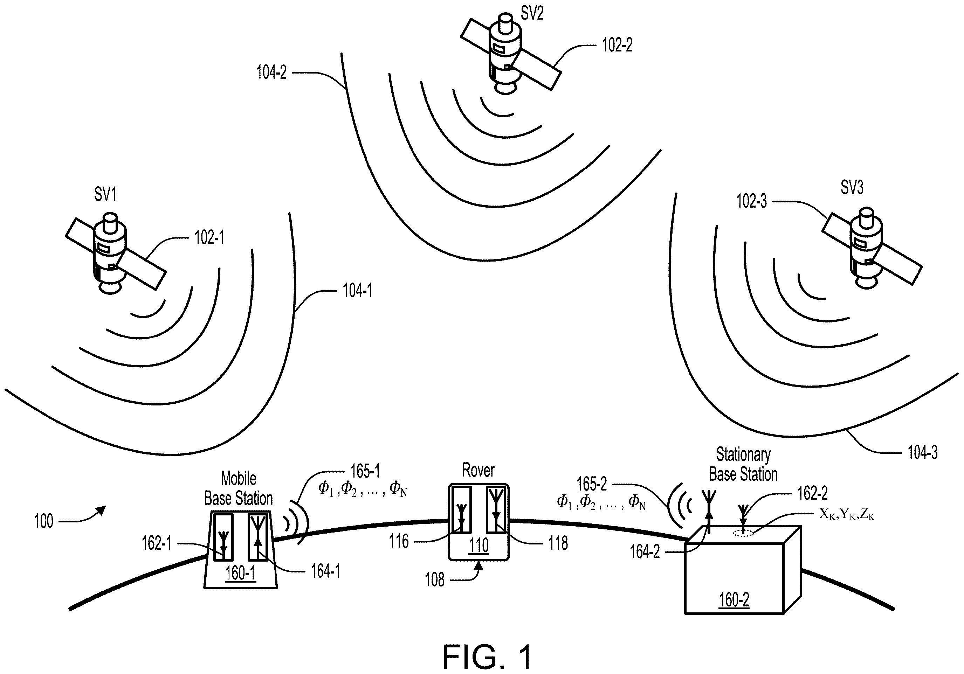

FIG. 1 illustrates an example of a rover 108 (containing a GNSS receiver 110), a mobile base station 160-1, and a stationary base station 160-2 operating within a GNSS 100, according to some embodiments of the present disclosure. GNSS 100 includes one or more GNSS satellites 102, i.e., space vehicles (SV), in orbit above rover 108 and base stations 160. GNSS satellites 102 may continuously, periodically, or intermittently broadcast GNSS signals 104 containing PRN codes modulated onto carrier frequencies (e.g., L1 and/or L2 carrier frequencies). GNSS signals 104 may include satellite position data, referred to as "ephemeris data", which indicates the satellite's current position and optionally the satellite's velocity. Furthermore, GNSS signals 104 of different GNSS satellites 102 may include different PRN codes that identify each particular GNSS satellite such that receivers may associate different received signals to different GNSS satellites 102.

For example, GNSS satellite 102-1 may broadcast GNSS signals 104-1 which contain a different PRN code and different ephemeris data than those contained in GNSS signals 104-2 broadcasted by GNSS satellite 102-2. Similarly, GNSS satellite 102-3 may broadcast GNSS signals 104-3 which contain a different PRN code and different ephemeris data than those contained in GNSS signals 104-1 and 104-2 broadcasted by GNSS satellites 102-1 and 102-2, respectively. One or more of GNSS signals 104 may be received by a GNSS antenna 116 of GNSS receiver 110. GNSS antenna 116 may be a patch antenna, a turnstile antenna, a helical antenna, a parabolic antenna, a phased-array antenna, a resistive plane antenna, a choke ring antenna, a radome antenna, among other possibilities.

Each of GNSS satellites 102 may belong to one or more of a variety of system types, such as Global Positioning System (GPS), Satellite-based Augmentation System (SBAS), Galileo, Global Navigation Satellite System (GLONASS), and BeiDou, and may transmit GNSS signals having one or more of a variety of signal types (e.g., GPS L1 C/A, GPS L2C, Galileo E1, Galileo E5A, etc.). For example, GNSS satellite 102-1 may be a GPS satellite and may transmit GNSS signals having a GPS L1 C/A signal type (i.e., GNSS signals having frequencies within the GPS L1 band and having been modulated using C/A code). GNSS satellite 102-1 may additionally or alternatively transmit GNSS signals having a GPS L2C signal type (i.e., GNSS signals having frequencies within the GPS L2 band and having been modulated using L2 civil codes). In some embodiments, GNSS satellite 102-1 may additionally be a Galileo satellite and may transmit GNSS signals having a Galileo signal type (e.g., Galileo E1). Accordingly, a single satellite may include the ability to transmit GNSS signals of a variety of signal types.

Mobile base station 160-1 and stationary base station 160-2 may include GNSS antennas 162-1 and 162-2, respectively, where GNSS antenna 162-2 is positioned at a known position (e.g., X_{K},Y_{K},Z_{K}). Mobile base station 160-1 may be movable such that mobile base stations 160-1 may be brought within or surrounding a project site so as to provide high-accuracy position estimates. Each of GNSS antennas 162 may be similar to GNSS antenna 116 and may be configured to receive one or more of GNSS signals 104. For example, each of GNSS antennas 162 may be a patch antenna, a turnstile antenna, a helical antenna, a parabolic antenna, a phased-array antenna, a resistive plane antenna, a choke ring antenna, a radome antenna, among other possibilities.

In some examples, GNSS receiver 110 may use RTK techniques to estimate its position with centimeter-level accuracy by making carrier phase measurements on the received GNSS signals 104. These carrier phase measurements, which may be referred to as "rover carrier phase measurements" or "rover RTK measurements", may be analyzed along with carrier phase measurements at one or both of base stations 160, which may be referred to as "reference carrier phase measurements" or "reference RTK measurements", to determine a vector (rover-to-base vector) between the position of rover 108 and the positions of base stations 160. This rover-to-base vector may be combined with the known positions of base stations 160 to estimate the position of rover 108.

In some examples, each of base stations 160 may send a correction signal 165 containing correction data to GNSS receiver 110. In some embodiments, the correction data may contain the reference carrier phase measurements, which may include a plurality of carrier phases *Φ*₁ ,*Φ*₂ , ... , *Φ*_{N}, where N is the number of GNSS satellites. In some embodiments, the correction data may further include the known position (e.g., X_{K},Y_{K},Z_{K}) of base station 160-2. Correction signals 165 containing the correction data may be wirelessly transmitted by base stations 160 using correction antennas 164 and may be received by GNSS receiver 110 using a correction antenna 118. The correction signals 165 may be transmitted continuously, periodically, or intermittently by base stations 160. In some embodiments, correction signals 165 are transmitted over a set of wireless frequencies outside the GNSS frequencies (e.g., lower than the GNSS frequencies). In some embodiments, correction antennas 164 may be used for transmission only and correction antenna 118 may be used for reception only, although in some embodiments additional handshaking between GNSS receiver 110 and base stations 160 may occur.

As described above, upon receiving the reference carrier phase measurements, rover 108 may process these measurements along with the rover carrier phase measurements to determine the rover-to-base vector, which can then be combined with the known position of base station 160-2 to estimate the position of rover 108. This position estimate may be continuously, periodically, or intermittently updated by making or receiving new carrier phase measurements. Subsequent position estimates may benefit from previous position estimates through filtering processes (e.g., Kalman filtering) capable of improving position estimate accuracy.

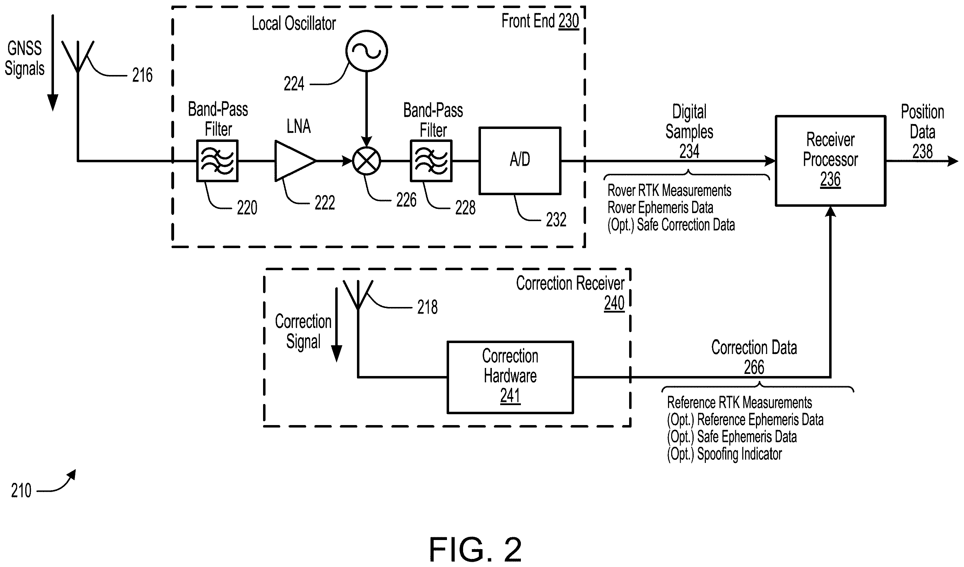

**FIG. 2** illustrates an example block diagram of GNSS receiver 210, according to some embodiments of the present disclosure. GNSS receiver 210 includes antenna 216 for receiving GNSS signals 104 and sending/routing GNSS signals 104 to a radio frequency (RF) front end 230. RF front ends are well known in the art, and in some instances include a band-pass filter 220 for initially filtering out undesirable frequency components outside the frequencies of interest, a low-noise amplifier (LNA) 222 for amplifying the received signal, a local oscillator 224 and a mixer 226 for down converting the received signal from RF to intermediate frequencies (IF), a band-pass filter 228 for removing frequency components outside IF, and an analog-to-digital (A/D) converter 232 for sampling the received signal to generate digital samples 234.

In some instances, RF front end 230 includes additional or fewer components than that shown in FIG. 2. For example, RF front end 230 may include a second local oscillator (90 degrees out of phase with respect to the first), a second mixer, a second band-pass filter, and a second A/D converter for generating digital samples corresponding to the quadrature component of GNSS signals 104. Digital samples corresponding to the in-phase component of GNSS signals 104 and digital samples corresponding to the quadrature component of GNSS signals 104 may both be sent to a receiver processor 236. In some embodiments, digital samples corresponding to both in-phase and quadrature components may be included in digital samples 234.

Other components within RF front end 230 may include a phase-locked loop (PLL) for synchronizing the phase of local oscillator 224 with the phase of the received signal, and a phase shifter for generating a second mixing signal using local oscillator 224 that is 90 degrees out of phase with local oscillator 224. In some embodiments, RF front end 230 does not include band-pass filter 220 and LNA 222. In some embodiments, A/D converter 232 is coupled directly to antenna 216 and samples the RF signal directly without down-conversion to IF. In some embodiments, RF front end 230 only includes band-pass filter 220 and A/D converter 232. Other possible configurations of RF front end 230 are possible.

Digital samples 234 generated by RF front end 230 may be sent to receiver processor 236 and may be received along with correction data 266 generated by a correction receiver 240. In the illustrated example, correction receiver 240 includes correction antenna 218 and correction hardware 241, which may include similar circuitry as front end 230. Based on digital samples 234 and correction data 266, receiver processor 236 may generate and output position data 238 comprising a plurality of GNSS points. Each of the plurality of GNSS points may be a 3D coordinate represented by three numbers. In some embodiments, the three numbers may correspond to latitude, longitude, and elevation/altitude. In other embodiments, the three numbers may correspond to X, Y, and Z positions. Position data 238 may be outputted to be displayed to a user, transmitted to a separate device (e.g., computer, smartphone, server, etc.) via a wired or wireless connection, or further processed, among other possibilities.

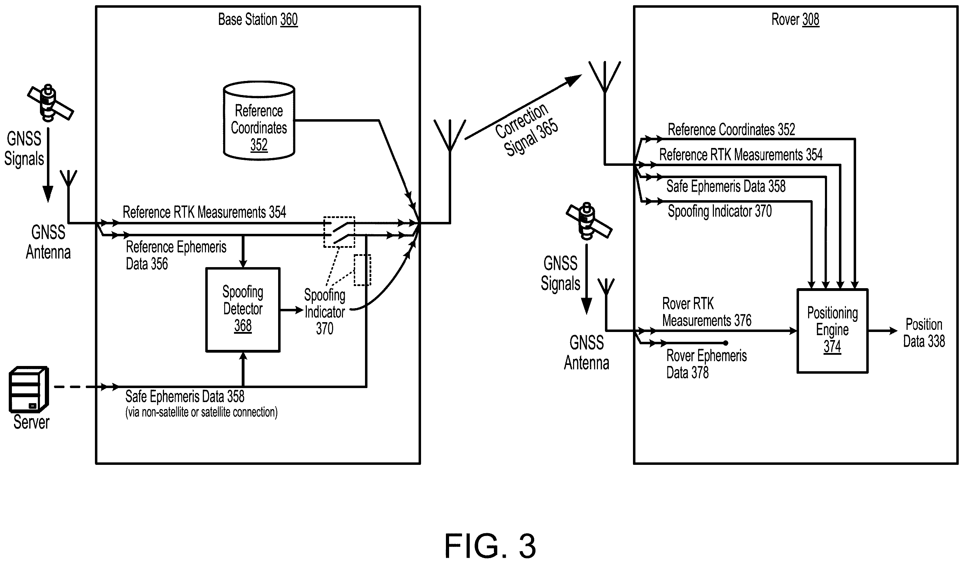

**FIG. 3** illustrates an example technique of computing a position of a rover 308 using safe correction data transmitted by a base station 360, according to some embodiments of the present disclosure. Each of base station 360 and rover 308 may receive GNSS signals via a respective GNSS antenna and may make reference RTK measurements 354 (alternatively referred to as "reference carrier phase measurements") and rover RTK measurements 376 (alternatively referred to as "rover carrier phase measurements"), respectively, based on the received GNSS signals. Furthermore, reference ephemeris data 356 may be decoded from the GNSS signals received at base station 360 and rover ephemeris data 378 may be decoded from the GNSS signals received at rover 308.

Base station 360 may receive safe ephemeris data 358 from a server. In some embodiments, safe ephemeris data 358 originates at a ground-based server that continually updates and verifies the accuracy of safe ephemeris data 358 so that it provides accurate positions of the GNSS satellites that transmit the GNSS signals received at base station 360 and rover 308. In some embodiments, base station 360 includes a spoofing detector 368 that performs a comparison between reference ephemeris data 356 and safe ephemeris data 358 to determine whether the GNSS signals received at base station 360 are spoofed signals. For example, spoofing detector 368 may compare each satellite position in reference ephemeris data 356 to a corresponding satellite position in safe ephemeris data 358 to determine whether the positions are consistent with each other (e.g., sufficiently similar/equivalent). This may include determining whether each pair of corresponding satellite positions are within a threshold distance of each other. In some examples, other types of data in the ephemeris data may be compared (e.g., satellite clock parameters, GNSS system time offset, etc.).

Based on the comparison between reference ephemeris data 356 and safe ephemeris data 358, spoofing detector 368 may output a spoofing indicator 370 that indicates whether the GNSS signals received at base station 360 are spoofed signals. For example, if the satellite positions in reference ephemeris data 356 are sufficiently similar to the satellite positions in safe ephemeris data 358, spoofing detector 368 may not output spoofing indicator 370, or may output spoofing indicator 370 to indicate that the GNSS signals are not spoofed signals. As another example, if the satellite positions in reference ephemeris data 356 are not sufficiently similar to the satellite positions in safe ephemeris data 358, spoofing detector 368 may output spoofing indicator 370 to indicate that the GNSS signals are spoofed signals and to optionally identify the spoofed satellite or spoofed satellite signals.

In some examples, it may be determined that the GNSS signals received at base station 360 are spoofed signals if any pair of corresponding satellite positions are not within the threshold distance of each other. In some examples, it may be determined that the GNSS signals received at base station 360 are spoofed signals if each and every pair of corresponding satellite position are not within the threshold distance of each other. Other example implementations may include calculating a cumulative error between corresponding satellite positions and comparing the cumulative error to a threshold. Other implementations are possible.

Base station 360 may transmit a correction signal 365 containing various correction data to rover 308. In the illustrated example, correction signal may include a set of reference coordinates 352 (the position of base station 360 in a reference coordinate frame), reference RTK measurements 354, reference ephemeris data 356, safe ephemeris data 358, and/or spoofing indicator 370. In some examples, base station 360 may determine whether to transmit reference RTK measurements 354 and reference ephemeris data 356 based on the spoofing indicator 370. For example, if it is determined that the GNSS signals are spoofed, spoofing detector 368 may prevent reference RTK measurements 354 and reference ephemeris data 356 from being transmitted in correction signal 365, and may instead transmit safe ephemeris data 358.

Rover 308 may include a positioning engine 374 that computes position data 338 that includes a position of rover 308. In some examples, the position may be can be computed using the various inputs to positioning engine 374, including reference coordinates 352, reference RTK measurements 354, safe ephemeris data 358 (or reference ephemeris data 356), spoofing indicator 370, and/or rover RTK measurements 376. In some examples, the position may be computed using these RTK measurements using a double differencing technique. In some examples, spoofing indicator 370 may be used by positioning engine 374 to determine whether to trust reference RTK measurements 354 or reference ephemeris data 356. For example, if spoofing indicator 370 indicates that the GNSS signals are spoofed signals, positioning engine 374 may ignore reference RTK measurements 354 and/or reference ephemeris data 356, and furthermore positioning engine 374 may ignore rover RTK measurements 376 since rover 308 may receive the same spoofed signals as base station 360.

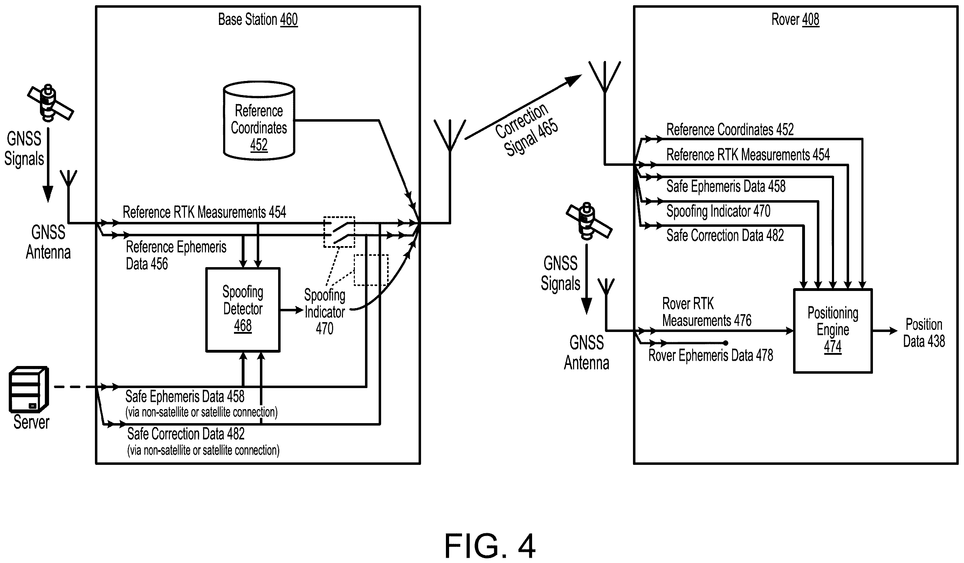

**FIG. 4** illustrates an example technique of computing a position of a rover 408 using safe correction data transmitted by a base station 460, according to some embodiments of the present disclosure. Similar to that described in reference to FIG. 3, each of base station 460 and rover 408 may receive GNSS signals via a respective GNSS antenna and may make reference RTK measurements 454 (reference carrier phase measurements) and rover RTK measurements 476 (rover carrier phase measurements), respectively, based on the received GNSS signals. Furthermore, reference ephemeris data 456 may be decoded from the GNSS signals received at base station 460 and rover ephemeris data 478 may be decoded from the GNSS signals received at rover 408.

In the illustrated example, base station 460 receives safe ephemeris data 458 and safe correction data 482. In some embodiments, both safe ephemeris data 458 and safe correction data 482 may originate at a server that continually updates and verifies the accuracy of these data. In some examples, safe correction data 482 may be derived from a geographic-specific error model, and may be used in conjunction with RTK carrier phase measurements to compute a geospatial position. As such, safe correction data 482 need not be measured from satellite signals and can instead be received from a server via a satellite or non-satellite connection.

In some examples the geographic-specific error model(s) may describe errors in GNSS code phase and/or carrier phase measurements at a given location and time. The geographic-specific error model(s) may be used to remove the GNSS errors in the GNSS observations (GNSS code phase and/or carrier phase measurements). In addition, the geographic-specific error model(s) may also be used to produce synthetic GNSS code and/or carrier phase measurements for a given location and time. Such error-models may be derived using a network of GNSS reference stations in order to estimate and/or measure GNSS observation data errors caused by erroneous information as part of the ephemeris data (i.e., satellite orbit, satellite hardware delays, and satellite clock errors) and atmospheric GNSS signal delays.

In some embodiments, base station 460 includes a spoofing detector 468 that performs a comparison between reference ephemeris data 456 and safe ephemeris data 458 to determine whether the GNSS signals received at base station 460 are spoofed signals. For example, spoofing detector 468 may compare each satellite position in reference ephemeris data 456 to a corresponding satellite position in safe ephemeris data 458 to determine whether the positions are consistent with each other. This may include determining whether each pair of corresponding satellite positions are within a threshold distance of each other. Alternatively or additionally, spoofing detector 468 may use reference RTK measurements 454 and safe correction data 482 to determine whether the GNSS signals are spoofed. For example, a position of base station 460 may be computed using reference RTK measurements 454 and safe correction data 482, and a residuals analysis of the computed position may be performed. For example, if the sum of the residuals is greater than the threshold, it may be determined that the GNSS signals are spoofed signals.

Based on the above-described comparison between reference ephemeris data 456 and safe ephemeris data 458 and/or the residual analysis using reference RTK measurements 454 and safe correction data 482, spoofing detector 468 may output a spoofing indicator 470 that indicates whether the GNSS signals received at base station 460 are spoofed signals. For example, if the satellite positions in reference ephemeris data 456 are sufficiently similar to the satellite positions in safe ephemeris data 458 and/or if the residuals are sufficiently small, spoofing detector 468 may not output spoofing indicator 470, or may output spoofing indicator 470 to indicate that the GNSS signals are not spoofed signals. As another example, if the satellite positions in reference ephemeris data 456 are not sufficiently similar to the satellite positions in safe ephemeris data 458 and/or if the residuals are sufficiently large, spoofing detector 468 may output spoofing indicator 470 to indicate that the GNSS signals are spoofed signals.

Base station 460 may transmit a correction signal 465 containing various correction data to rover 408. In the illustrated example, correction signal may include a set of reference coordinates 452 (the position of base station 460 in a reference coordinate frame), reference RTK measurements 454, reference ephemeris data 456, safe ephemeris data 458, safe correction data 482, and/or spoofing indicator 470. In some examples, base station 460 may determine whether to transmit reference RTK measurements 454 and reference ephemeris data 456 based on the spoofing indicator 470. For example, if it is determined that the GNSS signals are spoofed, spoofing detector 468 may prevent reference RTK measurements 454 and reference ephemeris data 456 from being transmitted in correction signal 465, and may instead transmit safe ephemeris data 458 and/or safe correction data 482.

Rover 408 may include a positioning engine 474 that computes position data 438 (including a position of rover 408) using the various inputs to positioning engine 474, including reference coordinates 452, reference RTK measurements 454 (or safe correction data 482), safe ephemeris data 458 (or reference ephemeris data 456), spoofing indicator 470, and/or rover RTK measurements 476. In some examples, the position may be computed using the RTK measurements using a double differencing technique. In some examples, spoofing indicator 470 may be used by positioning engine 474 to determine whether to trust reference RTK measurements 454 or reference ephemeris data 456. For example, if spoofing indicator 470 indicates that the GNSS signals are spoofed signals, positioning engine 474 may ignore reference RTK measurements 454 and/or reference ephemeris data 456 (and may instead use safe correction data 482), and furthermore positioning engine 474 may ignore rover RTK measurements 476 since rover 408 may receive the same spoofed signals as base station 460.

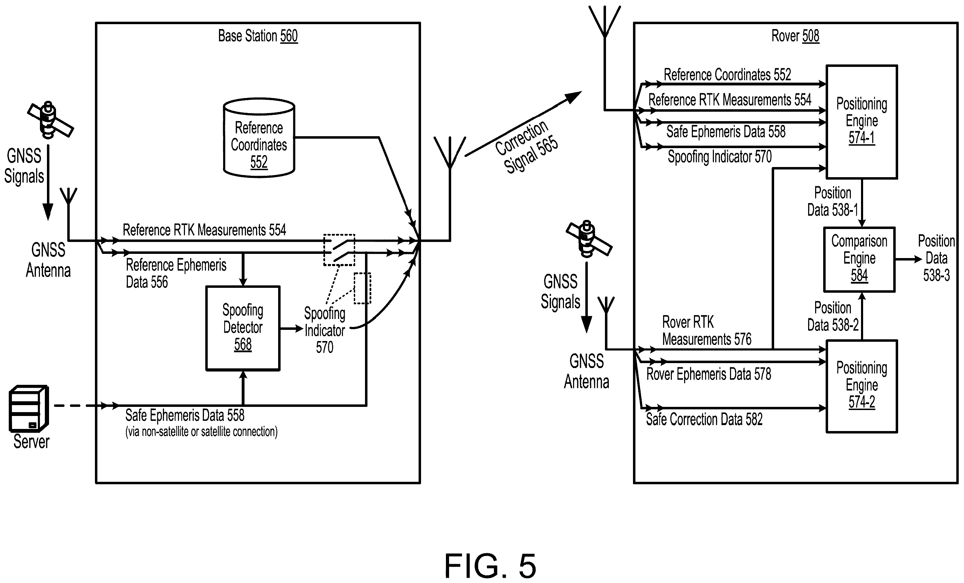

**FIG. 5** illustrates an example technique of computing a position of a rover 508 using safe correction data transmitted by a base station 560, according to some embodiments of the present disclosure. Similar to that described in reference to FIGS. 3 and 4, each of base station 560 and rover 508 may receive GNSS signals via a respective GNSS antenna and may make reference RTK measurements 554 (reference carrier phase measurements) and rover RTK measurements 576 (rover carrier phase measurements), respectively, based on the received GNSS signals. Furthermore, reference ephemeris data 556 may be decoded from the GNSS signals received at base station 560 and rover ephemeris data 578 may be decoded from the GNSS signals received at rover 508. Furthermore, safe correction data 582 may be received at rover 408 via the GNSS signals, where safe correction data 582 is derived from a geographic-specific error model and can be used with carrier phase measurements to compute a geospatial position.

In the illustrated example, base station 560 receives safe ephemeris data 558 from a server. As described in reference to FIG. 3, base station 560 may include a spoofing detector 568 that performs a comparison between reference ephemeris data 556 and safe ephemeris data 558 to determine whether the GNSS signals received at base station 560 are spoofed signals, and may further output a spoofing indicator 570 that indicates whether the GNSS signals received at base station 560 are spoofed signals. Base station 560 may transmit a correction signal 565 containing various correction data to rover 508, such as reference coordinates 552 (the position of base station 560 in a reference coordinate frame), reference RTK measurements 554, reference ephemeris data 556, safe ephemeris data 558, and/or spoofing indicator 570. In some examples, base station 560 may determine whether to transmit reference RTK measurements 554 and reference ephemeris data 556 based on the spoofing indicator 570. For example, if it is determined that the GNSS signals are spoofed, spoofing detector 568 may prevent reference RTK measurements 554 and reference ephemeris data 556 from being transmitted in correction signal 565, and may instead transmit safe ephemeris data 558.

Rover 508 may include two positioning engines 574 that compute position data 538 (each position data 538 including a position of rover 508) using the various inputs to positioning engines 574. For example, positioning engine 574-1 may compute position data 538-1 (which includes a computed position of rover 508) using reference coordinates 552, reference RTK measurements 554, safe ephemeris data 558 (or reference ephemeris data 556), spoofing indicator 570, and/or rover RTK measurements 576. In some examples, this position may be computed using RTK measurements using a double differencing technique. Positioning engine 574-2 may compute position data 538-2 (which includes a computed position of rover 508) using rover RTK measurements 576, rover ephemeris data 578, and/or safe correction data 582. In some examples, this position may be computed by using safe correction data 582 to model several error sources with mathematical models based on the approximate geographic location of rover 508. In various examples, rover RTK measurements 576 sent to positioning engine 574-1 may be the same as or different from rover RTK measurements 576 sent to positioning engine 574-2. For example, in some instances, these different rover RTK measurements 576 may be generated using different measurement engines that each receive the GNSS signals received at rover 508.

In some embodiments, rover 508 includes a comparison engine 584 that takes position data 538-1 and position data 538-2 and produces position data 538-3 (including a computed position of rover 508) by, for example, combining the position data, filtering one or both of the position data (by detecting inconsistencies between computed positions), selecting one of the position data based on estimated accuracy, among other possibilities. In some embodiments, when it is determined that position data 538-1 and position data 538-2 are inconsistent, comparison engine 584 may determine that either the GNSS signals received at base station 560 or rover 508 are spoofed signals. In some examples, if the position data are inconsistent and also spoofing indicator 570 indicates that the GNSS signals received at base station 560 are not spoofed signals, it may be determined that the GNSS signals received at rover 508 are spoofed signals. In some examples, if the position data are consistent and also spoofing indicator 570 indicates that the GNSS signals received at base station 560 are not spoofed signals, comparison engine 584 may determine that none of the GNSS signals are spoofed and may accordingly combine the positions (e.g., average the positions, output multiple positions, or select one of the two positions).

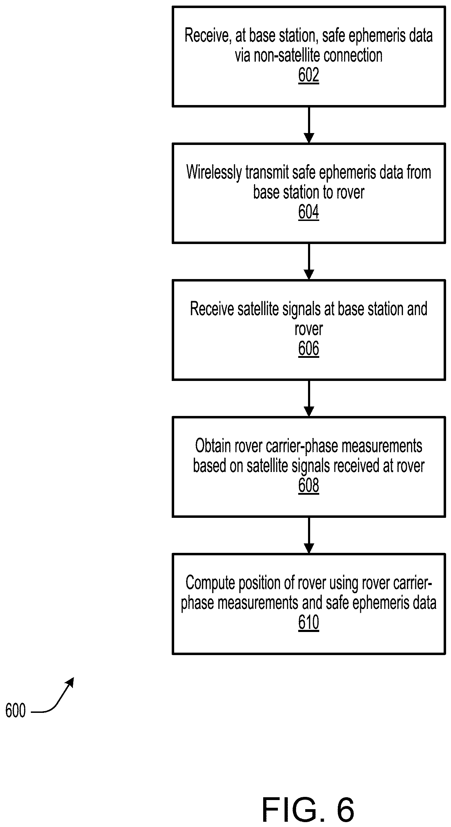

**FIG. 6** illustrates a method 600 of computing a position of a rover, in accordance with some embodiments of the present disclosure. Steps of method 600 may be performed in any order and/or in parallel, and one or more steps of method 600 or may be optionally performed. One or more steps of method 600 may be performed by one or more processors, such as those included in a base station or a rover. Method 600 may be implemented as a computer-readable medium or computer program product comprising instructions which, when the program is executed by one or more processors, cause the one or more processors to carry out the steps of method 600.

At step 602, safe ephemeris data (e.g., safe ephemeris data 358, 458, 558) is received at a base station (e.g., base stations 160, 360, 460, 560). The safe ephemeris data may be received via a non-satellite connection, such as a wired connection and/or an IP connection. In some implementations, the safe ephemeris data may be communicated to the base station via a satellite-based connection, such as via a satellite internet constellation that provides satellite internet access or via geostationary communication satellites. The safe ephemeris data may originate at a server. The safe ephemeris data may indicate positions of the plurality of satellites. In some implementations, the safe ephemeris data may indicate satellite clock parameters, a GNSS system time offset, among other possibilities.

At step 604, the safe ephemeris data is wirelessly transmitted from the base station to a rover (e.g., rovers 108, 308, 408, 508). The safe ephemeris data may be communicated in a correction signal (e.g., correction signals 165, 365, 465, 565). To transmit the correction signal, the base station may include a correction antenna (e.g., correction antenna 164) and the rover may include a correction antenna (e.g., correction antennas 118, 218).

At step 606, satellite signals (e.g., GNSS signals 104) are received at the base station and at the rover. The satellite signals may be transmitted by a plurality of satellites (e.g., GNSS satellites 102). The plurality of satellites may be part of a GNSS (e.g., GNSS 100). To receive the satellite signals, the base station may include a GNSS antenna (e.g., GNSS antenna 162) and the rover may include a GNSS antenna (e.g., GNSS antennas 116, 216).

At step 608, rover carrier phase measurements (e.g., rover RTK measurements 376, 476, 576) are obtained based on the satellite signals received at the rover. In some embodiments, rover ephemeris data (e.g., rover ephemeris data 378, 478, 578) may be obtained based on the satellite signals received at the rover.

At step 610, a position (e.g., position data 338, 448, 558) of the rover is computed using at least the rover carrier phase measurements and the safe ephemeris data.

In some embodiments, reference carrier phase measurements (e.g., reference RTK measurements 354, 454, 554) may be obtained based on the satellite signals received at the base station. The reference carrier phase measurements may be wirelessly transmitted from the base station to the rover in the correction signal. The position of the rover may be computed further using the reference carrier phase measurements. In some embodiments, reference ephemeris data (e.g., reference ephemeris data 356) may be obtained based on the satellite signals received at the base station. The reference ephemeris data may be wirelessly transmitted from the base station to the rover in the correction signal. The position of the rover may be computed further using the reference ephemeris data.

In some embodiments, a comparison may be performed between the reference ephemeris data and the safe ephemeris data to determine whether the satellite signals received at the base station are spoofed signals. In some embodiments, based on the comparison, it may be determined that the satellite signals received at the base station are spoofed signals, and a spoofing indicator (e.g., spoofing indicators 370, 470, 570) may be wirelessly transmitted from the base station to the rover indicating that the satellite signals received at the base station are spoofed signals. In some embodiments, based on the comparison, it may be determined that the satellite signals received at the base station are not spoofed signals, and the reference carrier phase measurements may be wirelessly transmitted from the base station to the rover.

In some embodiments, based on the comparison of the reference ephemeris data and safe ephemeris data, it may be determined that the satellite signals received at the base station are not spoofed signals. In this case, the safe ephemeris data that is transmitted from the base station to the rover may be in the form of a hash that is produced by hashing the safe ephemeris data using a hash function. The hash may be calculated at the base station or may be received from the server. Using the hash can save bandwidth and is also safe with a collision resistant hash function that produces sufficiently long hash codes. In some instances, the hash codes can even be truncated to some degree to save more bandwidth. When using the hash, the rover station may also produce a hash of the rover ephemeris data using the same hash function and compare it with the hash of the safe ephemeris data. Based on the comparison of the hash of the rover ephemeris data and the hash of the safe ephemeris data, the position of the rover may be computed further using the rover ephemeris data.

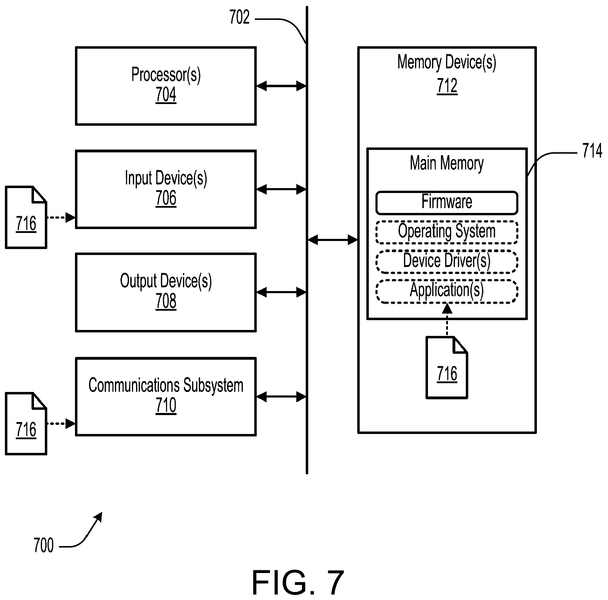

**FIG. 7** illustrates an example computer system 700 comprising various hardware elements, in accordance with some embodiments of the present disclosure. Computer system 700 may be incorporated into or integrated with devices described herein and/or may be configured to perform some or all of the steps of the methods provided by various embodiments. For example, in various embodiments, computer system 700 may be incorporated into the base station or the rover and/or may be configured to perform method 600. It should be noted that FIG. 7 is meant only to provide a generalized illustration of various components, any or all of which may be utilized as appropriate. FIG. 7, therefore, broadly illustrates how individual system elements may be implemented in a relatively separated or relatively more integrated manner.

In the illustrated example, computer system 700 includes a communication medium 702, one or more processor(s) 704, one or more input device(s) 706, one or more output device(s) 708, a communications subsystem 710, and one or more memory device(s) 712. Computer system 700 may be implemented using various hardware implementations and embedded system technologies. For example, one or more elements of computer system 700 may be implemented within an integrated circuit (IC), an application-specific integrated circuit (ASIC), an application-specific standard product (ASSP), a field-programmable gate array (FPGA), such as those commercially available by XILINX^{®}, INTEL^{®}, or LATTICE SEMICONDUCTORS, a system-on-a-chip (SoC), a microcontroller, a printed circuit board (PCB), and/or a hybrid device, such as an SoC FPGA, among other possibilities.

The various hardware elements of computer system 700 may be communicatively coupled via communication medium 702. While communication medium 702 is illustrated as a single connection for purposes of clarity, it should be understood that communication medium 702 may include various numbers and types of communication media for transferring data between hardware elements. For example, communication medium 702 may include one or more wires (e.g., conductive traces, paths, or leads on a PCB or integrated circuit (IC), microstrips, striplines, coaxial cables), one or more optical waveguides (e.g., optical fibers, strip waveguides), and/or one or more wireless connections or links (e.g., infrared wireless communication, radio communication, microwave wireless communication), among other possibilities.

In some embodiments, communication medium 702 may include one or more buses that connect the pins of the hardware elements of computer system 700. For example, communication medium 702 may include a bus that connects processor(s) 704 with main memory 714, referred to as a system bus, and a bus that connects main memory 714 with input device(s) 706 or output device(s) 708, referred to as an expansion bus. The system bus may itself consist of several buses, including an address bus, a data bus, and a control bus. The address bus may carry a memory address from processor(s) 704 to the address bus circuitry associated with main memory 714 in order for the data bus to access and carry the data contained at the memory address back to processor(s) 704. The control bus may carry commands from processor(s) 704 and return status signals from main memory 714. Each bus may include multiple wires for carrying multiple bits of information and each bus may support serial or parallel transmission of data.

Processor(s) 704 may include one or more central processing units (CPUs), graphics processing units (GPUs), neural network processors or accelerators, digital signal processors (DSPs), and/or other general-purpose or special-purpose processors capable of executing instructions. A CPU may take the form of a microprocessor, which may be fabricated on a single IC chip of metal-oxide-semiconductor field-effect transistor (MOSFET) construction. Processor(s) 704 may include one or more multi-core processors, in which each core may read and execute program instructions concurrently with the other cores, increasing speed for programs that support multithreading.

Input device(s) 706 may include one or more of various user input devices such as a mouse, a keyboard, a microphone, as well as various sensor input devices, such as an image capture device, a temperature sensor (e.g., thermometer, thermocouple, thermistor), a pressure sensor (e.g., barometer, tactile sensor), a movement sensor (e.g., accelerometer, gyroscope, tilt sensor), a light sensor (e.g., photodiode, photodetector, charge-coupled device), and/or the like. Input device(s) 706 may also include devices for reading and/or receiving removable storage devices or other removable media. Such removable media may include optical discs (e.g., Blu-ray discs, DVDs, CDs), memory cards (e.g., CompactFlash card, Secure Digital (SD) card, Memory Stick), floppy disks, Universal Serial Bus (USB) flash drives, external hard disk drives (HDDs) or solid-state drives (SSDs), and/or the like.

Output device(s) 708 may include one or more of various devices that convert information into human-readable form, such as without limitation a display device, a speaker, a printer, a haptic or tactile device, and/or the like. Output device(s) 708 may also include devices for writing to removable storage devices or other removable media, such as those described in reference to input device(s) 706. Output device(s) 708 may also include various actuators for causing physical movement of one or more components. Such actuators may be hydraulic, pneumatic, electric, and may be controlled using control signals generated by computer system 700.

Communications subsystem 710 may include hardware components for connecting computer system 700 to systems or devices that are located external to computer system 700, such as over a computer network. In various embodiments, communications subsystem 710 may include a wired communication device coupled to one or more input/output ports (e.g., a universal asynchronous receiver-transmitter (UART)), an optical communication device (e.g., an optical modem), an infrared communication device, a radio communication device (e.g., a wireless network interface controller, a BLUETOOTH^{®} device, an IEEE 802.11 device, a Wi-Fi device, a Wi-Max device, a cellular device), among other possibilities.

Memory device(s) 712 may include the various data storage devices of computer system 700. For example, memory device(s) 712 may include various types of computer memory with various response times and capacities, from faster response times and lower capacity memory, such as processor registers and caches (e.g., L0, L1, L2), to medium response time and medium capacity memory, such as random-access memory (RAM), to lower response times and lower capacity memory, such as solid-state drives and hard drive disks. While processor(s) 704 and memory device(s) 712 are illustrated as being separate elements, it should be understood that processor(s) 704 may include varying levels of on-processor memory, such as processor registers and caches that may be utilized by a single processor or shared between multiple processors.

Memory device(s) 712 may include main memory 714, which may be directly accessible by processor(s) 704 via the address and data buses of communication medium 702. For example, processor(s) 704 may continuously read and execute instructions stored in main memory 714. As such, various software elements may be loaded into main memory 714 to be read and executed by processor(s) 704 as illustrated in FIG. 7. Typically, main memory 714 is volatile memory, which loses all data when power is turned off and accordingly needs power to preserve stored data. Main memory 714 may further include a small portion of non-volatile memory containing software (e.g., firmware, such as BIOS) that is used for reading other software stored in memory device(s) 712 into main memory 714. In some embodiments, the volatile memory of main memory 714 is implemented as RAM, such as dynamic random-access memory (DRAM), and the non-volatile memory of main memory 714 is implemented as read-only memory (ROM), such as flash memory, erasable programmable read-only memory (EPROM), or electrically erasable programmable read-only memory (EEPROM).

Computer system 700 may include software elements, shown as being currently located within main memory 714, which may include an operating system, device driver(s), firmware, compilers, and/or other code, such as one or more application programs, which may include computer programs provided by various embodiments of the present disclosure. Merely by way of example, one or more steps described with respect to any methods discussed above, may be implemented as instructions 716, which are executable by computer system 700. In one example, such instructions 716 may be received by computer system 700 using communications subsystem 710 (e.g., via a wireless or wired signal that carries instructions 716), carried by communication medium 702 to memory device(s) 712, stored within memory device(s) 712, read into main memory 714, and executed by processor(s) 704 to perform one or more steps of the described methods. In another example, instructions 716 may be received by computer system 700 using input device(s) 706 (e.g., via a reader for removable media), carried by communication medium 702 to memory device(s) 712, stored within memory device(s) 712, read into main memory 714, and executed by processor(s) 704 to perform one or more steps of the described methods.

In some embodiments of the present disclosure, instructions 716 are stored on a computer-readable storage medium (or simply computer-readable medium). Such a computer-readable medium may be non-transitory and may therefore be referred to as a non-transitory computer-readable medium. In some cases, the non-transitory computer-readable medium may be incorporated within computer system 700. For example, the non-transitory computer-readable medium may be one of memory device(s) 712 (as shown in FIG. 7). In some cases, the non-transitory computer-readable medium may be separate from computer system 700. In one example, the non-transitory computer-readable medium may be a removable medium provided to input device(s) 706 (as shown in FIG. 7), such as those described in reference to input device(s) 706, with instructions 716 being read into computer system 700 by input device(s) 706. In another example, the non-transitory computer-readable medium may be a component of a remote electronic device, such as a mobile phone, that may wirelessly transmit a data signal that carries instructions 716 to computer system 700 and that is received by communications subsystem 710 (as shown in FIG. 7).

Instructions 716 may take any suitable form to be read and/or executed by computer system 700. For example, instructions 716 may be source code (written in a human-readable programming language such as Java, C, C++, C#, Python), object code, assembly language, machine code, microcode, executable code, and/or the like. In one example, instructions 716 are provided to computer system 700 in the form of source code, and a compiler is used to translate instructions 716 from source code to machine code, which may then be read into main memory 714 for execution by processor(s) 704. As another example, instructions 716 are provided to computer system 700 in the form of an executable file with machine code that may immediately be read into main memory 714 for execution by processor(s) 704. In various examples, instructions 716 may be provided to computer system 700 in encrypted or unencrypted form, compressed or uncompressed form, as an installation package or an initialization for a broader software deployment, among other possibilities.

In one aspect of the present disclosure, a system (e.g., computer system 700) is provided to perform methods in accordance with various embodiments of the present disclosure. For example, some embodiments may include a system comprising one or more processors (e.g., processor(s) 704) that are communicatively coupled to a non-transitory computer-readable medium (e.g., memory device(s) 712 or main memory 714). The non-transitory computer-readable medium may have instructions (e.g., instructions 716) stored therein that, when executed by the one or more processors, cause the one or more processors to perform the methods described in the various embodiments.

In another aspect of the present disclosure, a computer-program product that includes instructions (e.g., instructions 716) is provided to perform methods in accordance with various embodiments of the present disclosure. The computer-program product may be tangibly embodied in a non-transitory computer-readable medium (e.g., memory device(s) 712 or main memory 714). The instructions may be configured to cause one or more processors (e.g., processor(s) 704) to perform the methods described in the various embodiments.

In another aspect of the present disclosure, a non-transitory computer-readable medium (e.g., memory device(s) 712 or main memory 714) is provided. The non-transitory computer-readable medium may have instructions (e.g., instructions 716) stored therein that, when executed by one or more processors (e.g., processor(s) 704), cause the one or more processors to perform the methods described in the various embodiments.

The methods, systems, and devices discussed above are examples. Various configurations may omit, substitute, or add various procedures or components as appropriate. For instance, in alternative configurations, the methods may be performed in an order different from that described, and/or various stages may be added, omitted, and/or combined. Also, features described with respect to certain configurations may be combined in various other configurations. Different aspects and elements of the configurations may be combined in a similar manner. Also, technology evolves and, thus, many of the elements are examples and do not limit the scope of the disclosure or claims.

Specific details are given in the description to provide a thorough understanding of exemplary configurations including implementations. However, configurations may be practiced without these specific details. For example, well-known circuits, processes, algorithms, structures, and techniques have been shown without unnecessary detail in order to avoid obscuring the configurations. This description provides example configurations only, and does not limit the scope, applicability, or configurations of the claims. Rather, the preceding description of the configurations will provide those skilled in the art with an enabling description for implementing described techniques. Various changes may be made in the function and arrangement of elements without departing from the spirit or scope of the disclosure.

Having described several example configurations, various modifications, alternative constructions, and equivalents may be used without departing from the spirit of the disclosure. For example, the above elements may be components of a larger system, wherein other rules may take precedence over or otherwise modify the application of the technology. Also, a number of steps may be undertaken before, during, or after the above elements are considered. Accordingly, the above description does not bind the scope of the claims.

As used herein and in the appended claims, the singular forms "a", "an", and "the" include plural references unless the context clearly dictates otherwise. Thus, for example, reference to "a user" includes reference to one or more of such users, and reference to "a processor" includes reference to one or more processors and equivalents thereof known to those skilled in the art, and so forth.

Also, the words "comprise," "comprising," "contains," "containing," "include," "including," and "includes," when used in this specification and in the following claims, are intended to specify the presence of stated features, integers, components, or steps, but they do not preclude the presence or addition of one or more other features, integers, components, steps, acts, or groups.

It is also understood that the examples and embodiments described herein are for illustrative purposes only and that various modifications or changes in light thereof will be suggested to persons skilled in the art and are to be included within the spirit and purview of this application and scope of the appended claims.

## Claims

1. A method of computing a position of a rover, the method comprising:
receiving safe ephemeris data at a base station, the safe ephemeris data indicating positions of a plurality of satellites;
wirelessly transmitting the safe ephemeris data from the base station to the rover;
receiving satellite signals at the rover having been transmitted by the plurality of satellites;
obtaining rover carrier-phase measurements based on the satellite signals received at the rover; and
computing the position of the rover using the rover carrier phase measurements and the safe ephemeris data.

2. The method of claim 1, further comprising:
receiving satellite signals at the base station having been transmitted by the plurality of satellites;
obtaining reference carrier phase measurements based on the satellite signals received at the base station; and
obtaining reference ephemeris data based on the satellite signals received at the base station.

3. The method of claim 2, further comprising:
performing a comparison between the reference ephemeris data and the safe ephemeris data to determine whether the satellite signals received at the base station are spoofed signals.

4. The method of claim 3, further comprising:
based on the comparison, determining that the satellite signals received at the base station are spoofed signals; and
wirelessly transmitting a spoofing indicator from the base station to the rover indicating that the satellite signals received at the base station are spoofed signals.

5. The method of claim 3, further comprising:
based on the comparison, determining that the satellite signals received at the base station are not spoofed signals; and
wirelessly transmitting the reference carrier phase measurements from the base station to the rover, wherein the position of the rover is computed further using the reference carrier phase measurements.

6. The method of any one of claims 1-5, further comprising:
wirelessly transmitting a position of the base station from the base station to the rover, wherein the position of the rover is computed further using the position of the base station.

7. The method of claim 1, further comprising:
receiving safe correction data at the base station, wherein the safe correction data is derived from a geographic-specific error model; and
wirelessly transmitting the safe correction data from the base station to the rover, wherein the position of the rover is computed further using the safe correction data.

8. The method of any one of claims 1-7, wherein the satellite signals received at the rover are transmitted by a plurality of Global Positioning System (GPS) satellites.

9. One or more non-transitory computer-readable media comprising instructions that, when executed by one or more processors, cause the one or more processors to perform the method of any one of claims 1-8.

10. A system comprising:
one or more processors; and
one or more computer-readable media comprising instructions that, when executed by the one or more processors, cause the one or more processors to perform the method of any one of claims 1-8.
